# EUROPEAN PATENT SPECIFICATION

(11) **EP 3 588 856 B1**
(45) Date of publication and mention of the grant of the patent: **16.03.2022**
(21) Application number: 19176602.1
(22) Date of filing: 24.05.2019
(51) Int. Cl.: H04L 12/24

(54) **TECHNOLOGIES FOR HOT-SWAPPING A LEGACY APPLIANCE WITH A NETWORK FUNCTIONS VIRTUALIZATION APPLIANCE**
TECHNOLOGIEN ZUM HOT-SWAPPING EINES ALTGERÄTS MIT EINEM NETZWERKFUNKTIONSVIRTUALISIERUNGSGERÄT
TECHNOLOGIES DE REMPLACEMENT À CHAUD D'UN APPAREIL EXISTANT AVEC UN APPAREIL DE VIRTUALISATION DE FONCTIONS DE RÉSEAU

(30) Priority: 29.06.2018 US 201816023780
(43) Date of publication of application: 01.01.2020
(73) Proprietor: INTEL Corporation, Santa Clara, CA 95054 (US)
(72) Inventor: BROWNE, John J., Limerick, V94 C44N (IE); MCGRATH, Michael, Virginia, A82 E9D7 (IE); MACNAMARA, Chris, Limerick, V94 X65T (IE)
(74) Representative: Rummler, Felix

(56) References cited:
- WO-A1-2016/022698
- JUNIPER NETWORKS: "Virtualization requirements for co-existence and migration;NFV(13)REQ034r2_Virtualization_r equirements_for_co-existence_and_migration ", ETSI DRAFT; NFV(13)REQ034R2_VIRTUALIZATION_REQUIREMENT S_FOR_CO-EXISTENCE_AND_MIGRATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, 17 July 2013 (2013-07-17), pages 1-2, XP014199473, [retrieved on 2013-07-17]

## Description

### BACKGROUND

Modern computing devices have become ubiquitous tools for personal, business, and social uses. As such, many modern computing devices are capable of connecting to various data networks, including the Internet, to transmit and receive data communications over the various data networks at varying rates of speed. To facilitate communications between computing devices, the data networks typically include one or more network computing devices (e.g., compute servers, storage servers, etc.) to route communications (e.g., via switches, routers, etc.) that enter/exit a network (e.g., north-south network traffic) and between network computing devices in the network (e.g., east-west network traffic). Such data networks typically have included complex, large-scale computing environments, such as high-performance computing (HPC) and cloud computing environments. Traditionally, those data networks have included dedicated hardware devices, commonly referred to as network appliances, configured to perform a single function, such as security (e.g., a firewall, authentication, etc.), network address translation (NAT), load-balancing, deep packet inspection (DPI), transmission control protocol (TCP) optimization, caching, Internet Protocol (IP) management, etc.

More recently, network operators and service providers are relying on various network virtualization technologies (e.g., network function virtualization (NFV)) to provide network functions as virtual services (e.g., firewall services, NAT services, load-balancing services, DPI services, authentication services, TCP optimization services, etc.) which can be executed by a virtualization platform on general purpose hardware. However, the transition from the legacy network appliances to the virtualization alternatives (e.g., NFV appliances) can result in downtime, the throttling of services, service disruption, etc., any of which can make the migration difficult, especially at scale. In WO 2016/022698 A1 virtualized network function resources may be managed in a network. Performance measurements may be received for at least one mobility management entity (MME) in an MME pool, or for other network elements. If at least one of the performance measurements exceeds at least one predetermined threshold, instantiation of a new mobility management entity virtual network function (MME VNF) may be requested, and the MME VNF may be instantiated in response to the request. One or more user equipment (UE) devices managed by the MME pool may be connected to the added MME VNF. Juniper Networks, "Virtualization requirements for coexistence and migration" (draft); European Telecommunications Standards Institute (ETSI), 650, Route des Lucioles; F-06921 Sophia-Antipolis; France, (20130717), vol. ISG - NFV, pages 1 - 2, XP014199473 [A] 1-15, describes a NFV framework that shall support a migration path from classical physical network functions based solutions to more open standards based virtual networks functions solutions.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for hot-swapping a legacy network appliance with a network functions virtualization (NFV) appliance that includes a network computing device and a migration management computing device, each of which are communicatively coupled to a legacy network appliance and an NFV appliance;
FIG. 2 is a simplified block diagram of at least one embodiment of the migration management computing device of the system of FIG. 1;
FIG. 3 is a simplified block diagram of at least one embodiment of an environment of the migration management computing device of the system of FIG. 1;
FIGS. 4A and 4B are a simplified block diagram of at least one embodiment of a method for deploying a virtual network function (VNF) for hot-swapping a legacy network appliance with an NFV appliance on which the VNF has been deployed that may be executed by the migration management computing device of FIGS. 1-3; and
FIG. 5 is a simplified block diagram of at least one embodiment of a method for hot-swapping a legacy network appliance with an NFV appliance that may be executed by the migration management computing device of FIGS. 1-3.

### DETAILED DESCRIPTION OF THE DRAWINGS

The present invention relates to a computer device and to a method for managing a hot-swap between a legacy network appliance and a network functions virtualization appliance as defined in the independent claims.

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

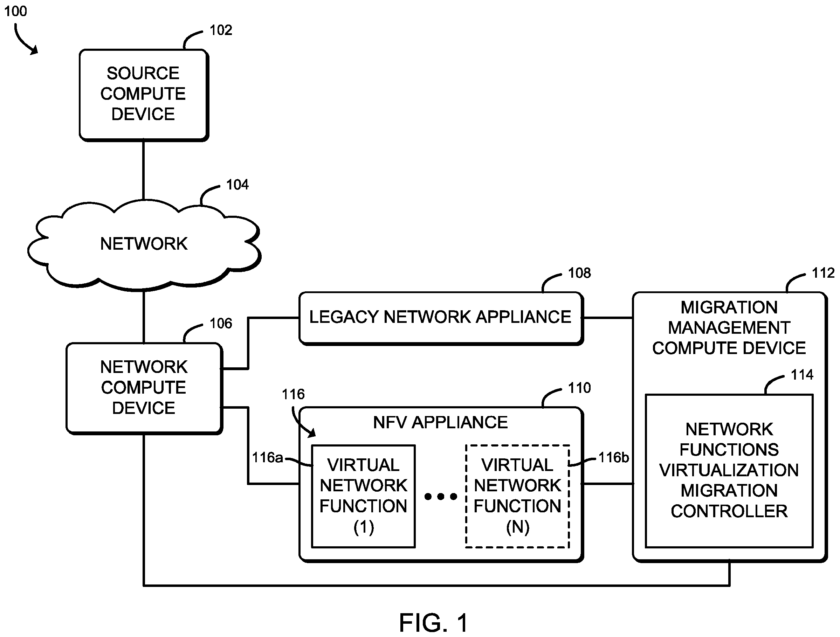

Referring now to FIG. 1, in an illustrative embodiment, a system 100 for hot-swapping a legacy network appliance with a network functions virtualization (NFV) appliance includes a network compute device 106 and a migration management compute device 112, each of which are communicatively coupled to a legacy network appliance 108 and an NFV appliance 110. In traditional legacy networks, the network compute device 106 receives network packets (e.g., Ethernet frames, messages, etc.) from the source compute devices 102, via the network 104, performs some level of processing on each received network packet, and then either drops the network packet or forwards the received network packets to a legacy network appliance (e.g., the legacy network appliance 108), such that a network service or function can be performed thereon.

It should be appreciated that the legacy network appliance consists of proprietary, dedicated hardware which is configured to support a single network service being performed thereon. Such network services may include any type of network service, including firewall services, network address translation (NAT) services, domain name system (DNS) services, load-balancing services, deep packet inspection (DPI) services, transmission control protocol (TCP) optimization services, cache management services, Internet Protocol (IP) address management services, etc. It should be further appreciated that while only a single legacy network appliance 108 is shown, the system 100 may include multiple legacy network appliances 108, in other embodiments, each of which is configured to perform a single network service.

In use, the migration management compute device 112 is configured to manage the migration of individual network functions out of the proprietary, dedicated hardware (e.g., the legacy network appliance 108) and into software (e.g., packaged as virtual machines (VMs) running one or more VNF instances) which runs on commodity hardware of the NFV appliance 110. To do so, the migration management compute device 112 identifies configuration information and operational parameters of a legacy network appliance 108 that is to be hot-swapped with an NFV appliance (e.g., the NFV appliance 110). The migration management compute device 112 then deploys, configures, and brings into service a virtual network function (VNF) instance 116 on the NFV appliance 110 that is equivalent to the function/operation of the legacy network appliance 108 being replaced.

In NFV architecture, a VNF is configured to handle specific network functions that run in one or more VMs on top of hardware networking infrastructure traditionally carried out by proprietary, dedicated hardware (e.g., the legacy network appliance 108), such as routers, switches, servers, cloud computing systems, etc. Further, a VM is a software program or operating system that not only exhibits the behavior of a separate computer, but is also capable of performing tasks such as running applications and programs like a separate computer. A VM, commonly referred to as a "guest," is typically configured to run a dedicated operating system on shared physical hardware resources of the device on which the VM has been deployed, commonly referred to as a "host." Multiple virtual machines can exist within a single host at one time.

It should be appreciated that each VNF instance 116 may be embodied as one or more VMs configured to execute corresponding software or instructions to perform a virtualized task. In other words, the VNF instances 116 move individual network functions out of dedicated hardware devices into software that can run on commodity hardware. Such tasks can include performing specific network functions that run on one or more VMs on top of the. For example, the VNF tasks may include one or more of the previously described services, including firewall services, DNS services, NAT services, load-balancing services, DPI services, TCP optimization services, cache management services, IP address management services, etc. As illustratively shown, the NFV appliance 110 includes one or more VNF instances 116. The illustrative VNF instances 116 include a first VNF instance 116 designated as VNF (1) 116a and, depending on the embodiment, may also include one or more additional VNF instances 116, illustratively designated as VNF (N) 116b (e.g., in which the VNF (N) 116b represents the "Nth" VNF instance 116, and wherein "N" is a positive integer).

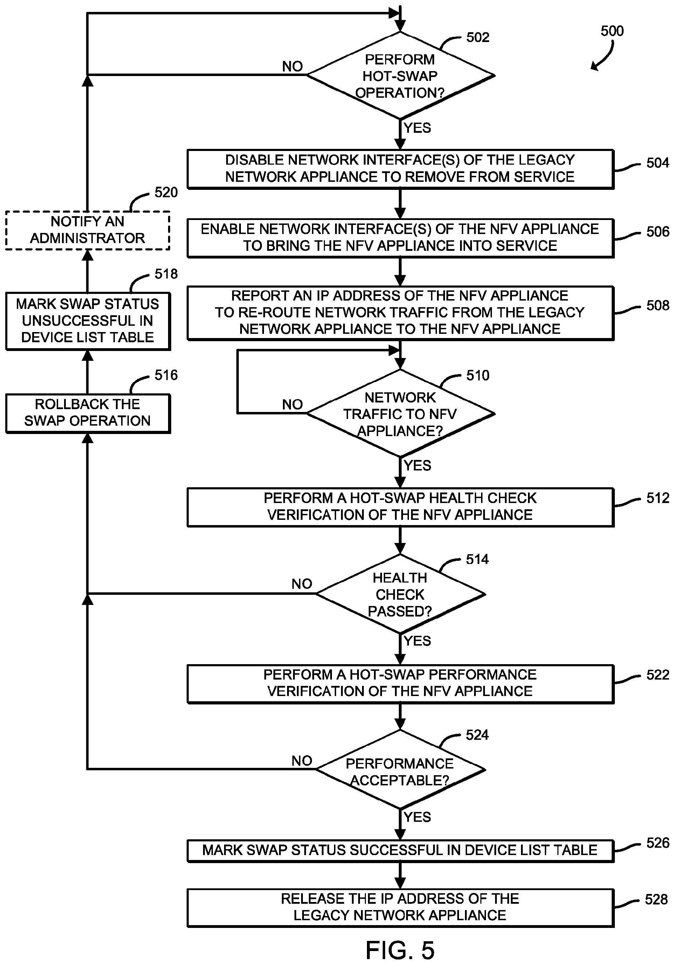

The migration management compute device 112 additionally performs the hot-swap operation between the legacy network appliance 108 and the NFV appliance 110 (see, e.g., the method 500 of FIG. 5) by coordinating the service exit of the legacy network appliance 108 and redirecting network traffic to the VNF instance 116 of the NFV appliance 110 deployed for the swap. As such, the migration can be performed by the migration management compute device 112 with minimal service interruption in an automated manner. Finally, the migration management compute device 112 is configured to verify the health and performance of the swapped NFV appliance 110 and associated VNF instance 116 to ensure the swap has been successful. It should be appreciated that, if the swap has been determined to be unsuccessful, the migration management compute device 112 is further configured to roll back the hot-swap operation and ensure the configuration and operational parameters of the legacy network appliance are restored.

The migration management compute device 112 may be embodied as any type of computation or computer device capable of performing the functions described herein, including, without limitation, a server (e.g., stand-alone, rack-mounted, blade, sled, etc.), switch (e.g., a disaggregated switch, a rack-mounted switch, a standalone switch, a fully managed switch, a partially managed switch, a full-duplex switch, and/or a half-duplex communication mode enabled switch), a router, a network appliance (e.g., physical or virtual), a web appliance, a processor-based system, and/or a multiprocessor system. Additionally, in some embodiments, the migration management compute device 112 may be embodied as a distributed computing system. In such embodiments, the migration management compute device 112 may be embodied as more than one computing device in which each computing device is configured to perform at least a portion of the functions described herein.

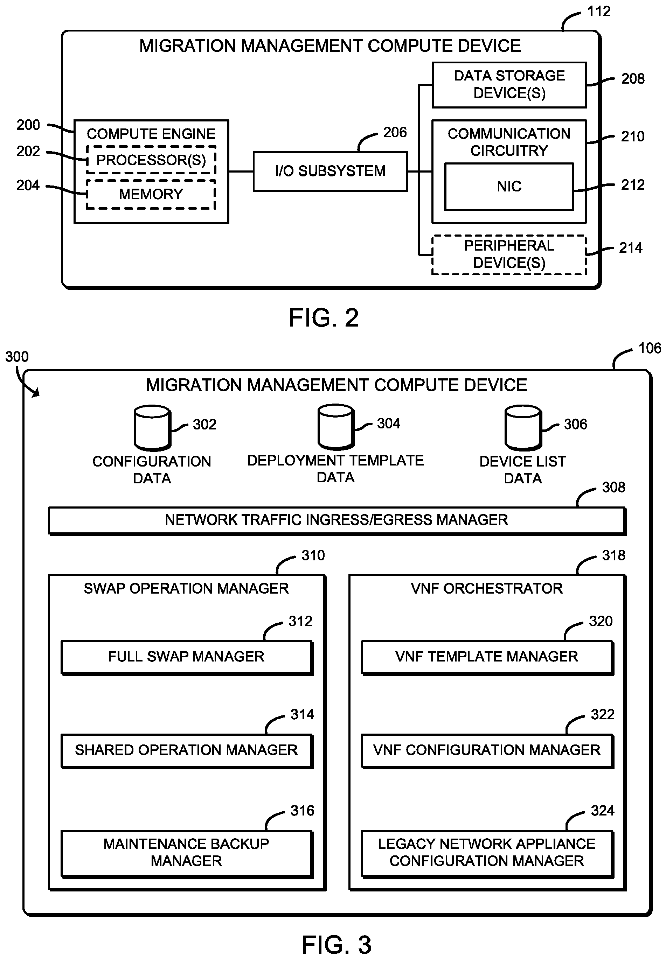

Referring now to FIG. 2, an illustrative migration management compute device 112 includes a compute engine 200, an I/O subsystem 206, one or more data storage devices 208, communication circuitry 210, and, in some embodiments, one or more peripheral devices 214. It should be appreciated that the migration management compute device 112 may include other or additional components, such as those commonly found in a typical computing device (e.g., various input/output devices and/or other components), in other embodiments. Additionally, in some embodiments, one or more of the illustrative components may be incorporated in, or otherwise form a portion of, another component.

The compute engine 200 may be embodied as any type of device or collection of devices capable of performing the various compute functions as described herein. In some embodiments, the compute engine 200 may be embodied as a single device such as an integrated circuit, an embedded system, a field-programmable-array (FPGA) (e.g., reconfigurable circuitry), a system-on-a-chip (SOC), an application specific integrated circuit (ASIC), reconfigurable hardware or hardware circuitry, or other specialized hardware to facilitate performance of the functions described herein. Additionally, in some embodiments, the compute engine 200 may include, or may be embodied as, one or more processors 202 (i.e., one or more central processing units (CPUs)) and memory 204.

The processor(s) 202 may be embodied as any type of processor capable of performing the functions described herein. For example, the processor(s) 202 may be embodied as one or more single-core processors, one or more multi-core processors, a digital signal processor, a microcontroller, or other processor or processing/controlling circuit(s). In some embodiments, the processor(s) 202 may be embodied as, include, or otherwise be coupled to a field programmable gate array (FPGA), an application specific integrated circuit (ASIC), reconfigurable hardware or hardware circuitry, or other specialized hardware to facilitate performance of the functions described herein.

The memory 204 may be embodied as any type of volatile or non-volatile memory or data storage capable of performing the functions described herein. It should be appreciated that the memory 204 may include main memory (i.e., a primary memory) and/or cache memory (i.e., memory that can be accessed more quickly than the main memory). Volatile memory may be a storage medium that requires power to maintain the state of data stored by the medium. Non-limiting examples of volatile memory may include various types of random access memory (RAM), such as dynamic random access memory (DRAM) or static random access memory (SRAM).

The compute engine 200 is communicatively coupled to other components of the migration management compute device 112 via the I/O subsystem 206, which may be embodied as circuitry and/or components to facilitate input/output operations with the processor 202, the memory 204, and other components of the migration management compute device 112. For example, the I/O subsystem 206 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 206 may form a portion of a system-on-a-chip (SoC) and be incorporated, along with one or more of the processor 202, the memory 204, and other components of the migration management compute device 112, on a single integrated circuit chip.

The one or more data storage devices 208 may be embodied as any type of storage device(s) configured for short-term or long-term storage of data, such as, for example, memory devices and circuits, memory cards, hard disk drives, solid-state drives, or other data storage devices. Each data storage device 208 may include a system partition that stores data and firmware code for the data storage device 208. Each data storage device 208 may also include an operating system partition that stores data files and executables for an operating system.

The communication circuitry 210 may be embodied as any communication circuit, device, or collection thereof, capable of enabling communications between the migration management compute device 112 and other computing devices, as well as any network communication enabling devices, such as a gateway, an access point, a network switch/router, etc., to allow communication over the network 104. Accordingly, the communication circuitry 210 may be configured to use any one or more communication technologies (e.g., wireless or wired communication technologies) and associated protocols (e.g., Ethernet, Bluetooth^{®}, Wi-Fi^{®}, WiMAX, LTE, 5G, etc.) to effect such communication. It should be appreciated that, in some embodiments, the communication circuitry 210 may include specialized circuitry, hardware, or combination thereof to perform pipeline logic (e.g., hardware algorithms) for performing at least a portion of the functions described herein. Additionally or alternatively, one or more of the functions of communication circuitry 210 as described herein may be performed by specialized circuitry, hardware, or combination thereof embodied as a system-on-a-chip (SoC) or otherwise form a portion of a SoC of the migration management compute device 112 (e.g., incorporated on a single integrated circuit chip along with a processor 202, the memory 204, and/or other components of the migration management compute device 112). Alternatively, in some embodiments, the specialized circuitry, hardware, or combination thereof may be embodied as one or more discrete processing units of the migration management compute device 112, each of which may be capable of performing one or more of the functions described herein.

The illustrative communication circuitry 210 includes a network interface controller (NIC) 212, also commonly referred to as a host fabric interface (HFI) in some embodiments (e.g., high-performance computing (HPC) environments). The NIC 212 may be embodied as one or more add-in-boards, daughtercards, network interface cards, controller chips, chipsets, or other devices that may be used by the migration management compute device 112. In some embodiments, the NIC 120 may be embodied as part of a system-on-a-chip (SoC) that includes one or more processors, or included on a multichip package that also contains one or more processors. In some embodiments, the NIC 120 may include a local processor (not shown) and/or a local memory (not shown) that are both local to the NIC 120. In such embodiments, the local processor of the NIC 120 may be capable of performing one or more of the functions of a processor 202 described herein.

Additionally or alternatively, in such embodiments, the local memory of the NIC 120 may be integrated into one or more components of the migration management compute device 112 at the board level, socket level, chip level, and/or other levels. For example, in some embodiments, the NIC 212 may be integrated with the processor 202, embodied as an expansion card coupled to the I/O subsystem 206 over an expansion bus (e.g., PCI Express), part of a SoC that includes one or more processors, or included on a multichip package that also contains one or more processors. Additionally or alternatively, in some embodiments, functionality of the NIC 212 may be integrated into one or more components of the migration management compute device 112 at the board level, socket level, chip level, and/or other levels.

The one or more peripheral devices 214 may include any type of device that is usable to input information into the migration management compute device 112 and/or receive information from the migration management compute device 112. The peripheral devices 214 may be embodied as any auxiliary device usable to input information into the migration management compute device 112, such as a keyboard, a mouse, a microphone, a barcode reader, an image scanner, etc., or output information from the migration management compute device 112, such as a display, a speaker, graphics circuitry, a printer, a projector, etc. It should be appreciated that, in some embodiments, one or more of the peripheral devices 214 may function as both an input device and an output device (e.g., a touchscreen display, a digitizer on top of a display screen, etc.). It should be further appreciated that the types of peripheral devices 214 connected to the migration management compute device 112 may depend on, for example, the type and/or intended use of the migration management compute device 112. Additionally or alternatively, in some embodiments, the peripheral devices 214 may include one or more ports, such as a USB port, for example, for connecting external peripheral devices to the migration management compute device 112.

Referring back to FIG. 1, the source compute device 102 may be embodied as any type of computation or computer device capable of performing the functions described herein, including, without limitation, a portable computing device (e.g., smartphone, tablet, laptop, notebook, wearable, etc.) that includes mobile hardware (e.g., processor, memory, storage, wireless communication circuitry, etc.) and software (e.g., an operating system) to support a mobile architecture and portability, a computer, a server (e.g., stand-alone, rack-mounted, blade, etc.), a network appliance (e.g., physical or virtual), a web appliance, a distributed computing system, a processor-based system, and/or a multiprocessor system. The network compute device 106 may be embodied as any type of computation or computer device capable of performing the functions described herein, including, without limitation, a server (e.g., stand-alone, rack-mounted, blade, sled, etc.), switch (e.g., a disaggregated switch, a rack-mounted switch, a standalone switch, a fully managed switch, a partially managed switch, a full-duplex switch, and/or a half-duplex communication mode enabled switch), a router, a gateway, a network appliance (e.g., physical or virtual), a web appliance, a distributed computing system, a processor-based system, and/or a multiprocessor system.

While not illustratively shown, it should be appreciated that source compute device 102 and the network compute device 106 may include similar and/or like components to those of the illustrative migration management compute device 112. As such, figures and descriptions of those components are not repeated herein for clarity of the description with the understanding that the description of the corresponding components provided above in regard to the migration management compute device 112 applies equally to the corresponding components of the source compute device 102 and the network compute device 106. Of course, it should be appreciated that the source compute device 102 and the network compute device 106 may include additional and/or alternative components, depending on the embodiment.

The network 104 may be embodied as any type of wired or wireless communication network, including but not limited to a wireless local area network (WLAN), a wireless personal area network (WPAN), a cellular network (e.g., Global System for Mobile Communications (GSM), Long-Term Evolution (LTE), etc.), a telephony network, a digital subscriber line (DSL) network, a cable network, a local area network (LAN), a wide area network (WAN), a global network (e.g., the Internet), or any combination thereof. It should be appreciated that, in such embodiments, the network 104 may serve as a centralized network and, in some embodiments, may be communicatively coupled to another network (e.g., the Internet). Accordingly, the network 104 may include a variety of other virtual and/or physical network computing devices (e.g., routers, switches, network hubs, gateways, servers, storage devices, compute devices, (high-speed) interconnects, etc.), as needed to facilitate communication between the source compute devices 102 and the network compute device 106, which are not shown to preserve clarity of the description.

Referring now to FIG. 3, in use, the migration management compute device 112 establishes an environment 300 during operation. The illustrative environment 300 includes a network traffic ingress/egress manager 308, a swap operation manager 310, and a VNF orchestrator 318. The various components of the environment 300 may be embodied as hardware, firmware, software, or a combination thereof. As such, in some embodiments, one or more of the components of the environment 300 may be embodied as circuitry or collection of electrical devices (e.g., network traffic ingress/egress management circuitry 308, swap operation management circuitry 310, VNF orchestration circuitry 318, etc.).

It should be appreciated that, in such embodiments, one or more of the network traffic ingress/egress management circuitry 308, the swap operation management circuitry 310, and the VNF orchestration circuitry 318 may form a portion of one or more of the compute engine 200, the I/O subsystem 206, the communication circuitry 210 (e.g., the NIC 212 of the communication circuitry 210), and/or other components of the migration management compute device 112. Additionally, in some embodiments, one or more of the illustrative components may form a portion of another component and/or one or more of the illustrative components may be independent of one another. Further, in some embodiments, one or more of the components of the environment 300 may be embodied as virtualized hardware components or emulated architecture, which may be established and maintained by the compute engine 200 or other components of the migration management compute device 112. It should be appreciated that the migration management compute device 112 may include other components, sub-components, modules, sub-modules, logic, sub-logic, and/or devices commonly found in a computing device, which are not illustrated in FIG. 3 for clarity of the description.

In the illustrative environment 300, the migration management compute device 112 additionally includes configuration data 302, deployment template data 304, and device list data 306, each of which may be accessed by the various components and/or sub-components of the migration management compute device 112. It should be appreciated that, in some embodiments, the data stored in or otherwise represented by each of the configuration data 302, the deployment template data 304, and the device list data 306 may not be mutually exclusive relative to each other. Additionally, it should be further appreciated that in some embodiments at least a portion of the data stored in, or otherwise represented by, the configuration data 302, the deployment template data 304, and/or the device list data 306 may be stored in additional or alternative storage locations (e.g., host memory of the migration management compute device 112 relative to memory local to the NIC 212). As such, although the various data utilized by the migration management compute device 112 is described herein as particular discrete data, such data may be combined, aggregated, and/or otherwise form portions of a single or multiple data sets, including duplicative copies, in other embodiments.

The network traffic ingress/egress manager 308, which may be embodied as hardware, firmware, software, virtualized hardware, emulated architecture, and/or a combination thereof as discussed above, is configured to receive inbound and route/transmit outbound network traffic. To do so, the network traffic ingress/egress manager 308 is configured to facilitate inbound/outbound network communications (e.g., network traffic, network packets, network flows, etc.) to and from the migration management compute device 112. For example, the network traffic ingress/egress manager 308 is configured to manage (e.g., create, modify, delete, etc.) connections to physical and virtual network ports (i.e., virtual network interfaces) of the migration management compute device 112 (e.g., via the communication circuitry 210), as well as the ingress/egress buffers/queues associated therewith.

The network traffic ingress/egress manager 308 is additionally configured to maintain a device list which maintains the IP addresses of those legacy network appliances 108 and VNF instances 116 for which the migration management compute device 112 is communicatively coupled. In some embodiments, the IP addresses, as well as other identifying information, may be stored in the device list data 306.

The swap operation manager 310, which may be embodied as hardware, firmware, software, virtualized hardware, emulated architecture, and/or a combination thereof as discussed above, is configured to manage the hot-swap operation between a legacy network appliance (e.g., the legacy network appliance 108 of FIG. 1) and an NFV appliance (e.g., the NFV appliance 110 of FIG. 1), or more particularly a VNF instance (e.g., one of the VNF instances 116 of FIG. 1) of the NFV appliance 110. To do so, the illustrative swap operation manager 310 includes a full swap manager 312, a shared operation manager 314, and a maintenance backup manager 316.

The full swap manager 312 is configured to manage a full swap operation. To do so, the full swap manager 312 is configured to swap the NFV appliance 110 with the NFV appliance 110. More particularly, the full swap manager 312 is configured to substitute the legacy network appliance 108 with a VNF instance 116 of the NFV appliance 110 and remove the legacy network appliance 108 upon having determined the full swap operation has been successful. The full swap manager 312 is additionally configured to roll back to the substituted legacy network appliance 108 in the event the full swap operation was determined to be unsuccessful.

In some embodiments, the full swap manager 312 may be configured to maintain a list of IP addresses and VNF instances 116 which can be automatically swapped from a legacy network appliance 108 to a VNF instance 116 and/or a list of IP addresses and VNF instances 116 which have been swapped from legacy network appliances 108 to VNF instances 116. Accordingly, in such embodiments, in the event of a swap fail, one or more of the swapped VNF instances 116 can be rolled back to the applicable legacy network appliance 108 (e.g., based on the corresponding configuration) as a function of the list mapping. Further, in such embodiments, a chain of available/swapped VNF instances 116 can be recorded and, if one VNF instance 116 fails, a number of preselected VNF instances 116 in the list (e.g., those VNF instances 116 in the chain after the failed VNF instance 116) can optionally be rolled back to their respective legacy network appliances 108.

The shared operation manager 314 is configured to manage a shared swap operation. To do so, the shared operation manager 314 is configured to deploy the NFV appliance 110, or more particularly a VNF instance 116 of the NFV appliance 110, to handle a portion of the network traffic and configure the legacy network appliance 108 to handle a portion of the network traffic. The shared operation manager 314 is additionally configured to monitor the health and performance of both the legacy network appliance 108 and the VNF instance 116 such that upon a detected failure all network traffic can be routed to the non-failing one of the legacy network appliance 108 and the VNF instance 116.

The maintenance backup manager 316 is configured to manage a maintenance backup operation. It should be appreciated that the maintenance being performed may be to the legacy network appliance 108 or the NFV appliance 110. Accordingly, the maintenance backup manager 316 is configured to manage the maintenance backup operation for either condition. To manage the maintenance backup operation for the legacy network appliance 108 using a VNF instance 116, the maintenance backup manager 316 is configured to, similar to the full swap operation (e.g., managed by the full swap manager 312), manage the configuration and deployment of a VNF instance 116 on a NFV appliance 110 such that the VNF instance 116 can handle all of the network traffic until the network traffic management can be reverted back to the legacy network appliance 108 (e.g., maintenance on the legacy network appliance 108 has completed). To manage the maintenance backup operation for the NFV appliance 110 using a legacy network appliance 108, the maintenance backup manager 316 is configured to manage the configuration of the legacy network appliance 108 such that the legacy network appliance 108 can handle all of the network traffic that would otherwise be routed to the applicable VNF instance 116 of the NFV appliance 110 until the network traffic management can be reverted back to the applicable VNF instance 116 of the NFV appliance 110 (e.g., maintenance on the NFV appliance 110 has completed).

It should be appreciated that the swap operation manager 310 may be additionally configured to verify whether the requested operation (e.g., the full swap operation, the shared operation, or the maintenance backup operation) was successful or not. To do so, the swap operation manager 310 may be configured to verify health and performance levels of the VNF instance 116 of the NFV appliance 110 deployed for the swap operation subsequent to the swap operation having been performed. In some embodiments, the swap operation manager 310 may additionally be configured to track a status (e.g., successful or unsuccessful) of each operation and/or report the status of each operation to an administrator and/or other management and orchestration device.

The VNF orchestrator 318 is configured to manage the configuration and deployment of the VNF instances 116 on the respective NFV appliances 110. To do so, the illustrative VNF orchestrator 318 includes a VNF template manager 320, a VNF configuration manager 322, and a legacy network appliance configuration manager 324. The VNF template manager 320 is configured to manage a set of predefined VNF deployment templates usable to configure and deploy VNF instances 116. Each of the VNF deployment templates includes one or more resource fields and one or more network configuration fields usable to match the resource configuration settings and operational parameters of the legacy network appliance 108 to the configuration of the VNF instances 116.

The VNF configuration manager 322 is configured to manage the configuration of the VNF instances 116 (e.g., based on the resource configuration settings of the VNF deployment template). The set of VNF deployment templates includes a predefined default VNF deployment template from which configuration decisions can be made from a predefined decision tree. Accordingly, the VNF configuration manager 322 is additionally configured to configure the VNF instances 116 instantiated using the predefined default VNF deployment template and the predefined decision tree.

The legacy network appliance configuration manager 324 is configured to manage the resource configuration settings and operational parameters for the legacy network appliance 108. To do so, the legacy network appliance configuration manager 324 is configured to identify or otherwise retrieve (e.g., via an interrogation) the configuration information and operational parameters of the legacy network appliance 108. The configuration information and operational parameters may include any information necessary to replicate the operational conditions of the legacy network appliance 108, including required resources, network configuration information, and any other information usable to configure a corresponding VNF instance 116 to perform operationally the same as the legacy network appliance 108 for which it is being swapped.

Accordingly, the configuration information may include any resource configuration settings of the legacy network appliance 108 which might be required to replicate configuration of the corresponding VNF instance 116, such as the amount of resources (e.g., compute, storage, etc.) to be allocated. The operational parameters may include any information of the network interfaces of the legacy network appliance 108 which may be usable to usable to configure the corresponding network interfaces of the VNF instance 116, such as, but not limited to, a number of connections per second, mean throughput, max throughput, etc. The legacy network appliance configuration manager 324 may be configured to use any standard network management protocol, such as Simple Network Management Protocol (SNMP), Network Configuration Protocol (NETCONF), etc. In some embodiments, the configuration information and/or the operational parameters may be stored in the configuration data 302.

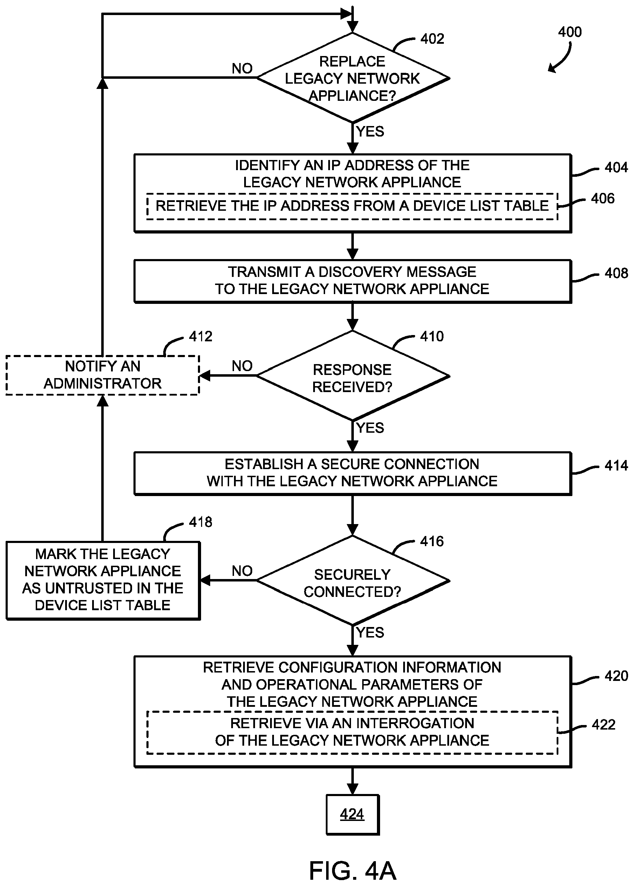

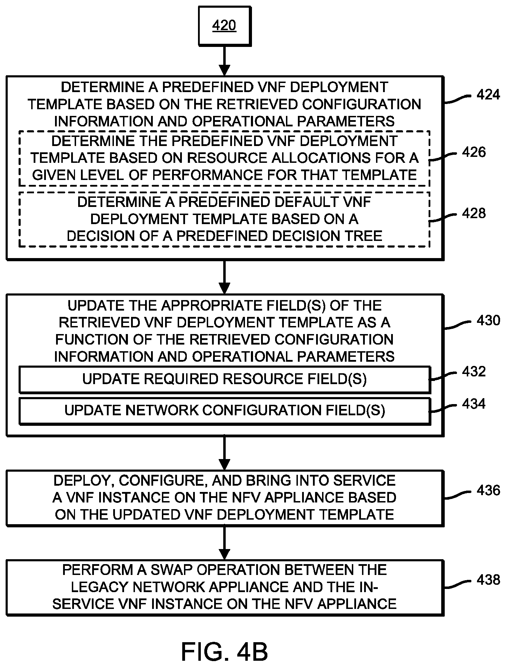

Referring now to FIGS. 4A and 4B, a method 400 for deploying a virtual network function instance (e.g., one of the VNF instances 116 of FIG. 1) for hot-swapping a legacy network appliance (e.g., the legacy network appliance 108 of FIG. 1) with an NFV appliance (e.g., the NFV appliance 110 of FIG. 1) on which the VNF instance has been deployed is shown which may be executed by a migration management computing device (e.g., the migration management compute device 112 of FIG. 1). The method 400 begins with block 402, in which the migration management compute device 112 determines whether to replace a legacy network appliance 108 with a NFV appliance 110. For example, the migration may be initiated by a scheduler (e.g., in accordance with a predetermined time and date) or on-demand (e.g., initiated by an administrator, maintenance personnel, etc.).

If the migration management compute device 112 has determined that a legacy network appliance 108 is to be replaced, the method 400 advances to block 404. In block 404, the migration management compute device 112 identifies an IP address of the legacy network appliance 108 to be replaced. For example, in block 406, the migration management compute device 112 may retrieve the IP address of the legacy network appliance 108 from a device list table which includes the IP addresses of each legacy network appliance 108 communicatively coupled to the migration management compute device 112. It should be appreciated that, in some embodiments, identifying information of the legacy network appliance 108 to be replaced, which may or may not include the IP address, may be provided when the migration is initiated (e.g., in block 402).

In block 408, the migration management compute device 112 transmits a discovery message to the legacy network appliance 108 to determine whether the migration management compute device 112 can communicate with the legacy network appliance 108. In block 410, the migration management compute device 112 determines whether a response to the discovery message has been received from the legacy network appliance 108. If not (e.g., a timeout period has elapsed), the method 400 may branch to block 412 in which the migration management compute device 112 notifies an administrator of the communication failure prior to the method 400 returning to block 402 to determine whether another legacy network appliance 108 is to be replaced. Otherwise, if the migration management compute device 112 has received a response to the discovery message, the method 400 branches to block 414.

In block 414, the migration management compute device 112 establishes a secure connection with the legacy network appliance 108. In block 416, the migration management compute device 112 determines whether a secure connection has been established between the migration management compute device 112 and the legacy network appliance 108. If a secure connection cannot be established, the method 400 branches to block 418, in which the migration management compute device 112 marks the legacy network appliance 108 as an untrusted device in the device list table before the method 400 may proceed to block 412 in which the migration management compute device 112 notifies an administrator of the communication failure prior to the method 400 returning to block 402 to determine whether another legacy network appliance 108 is to be replaced. Otherwise, if the migration management compute device 112 determines that the secure connection has been established, the method 400 branches to block 420.

In block 420, the migration management compute device 112 retrieves configuration information and operational parameters of the legacy network appliance 108. For example, in block 422, the migration management compute device 112 may retrieve the configuration information and operational parameters of the legacy network appliance 108 via an interrogation process using any standard network management protocol. As described previously, the configuration information and operational parameters may include any information necessary to replicate the operational conditions of the legacy network appliance 108, including required resources, network configuration information, and any other information usable to determine a size of the VNF instance 116 to be deployed and configure a corresponding VNF instance 116 to perform operationally the same as the legacy network appliance 108 for which it is being swapped.

In block 424, as shown in FIG. 4B, the migration management compute device 112 determines a predefined VNF deployment template based on the retrieved configuration information and operational parameters retrieved in block 420. For example, in block 426, the migration management compute device 112 may determine the predefined VNF deployment template based on resource allocations for a given level of performance for that template. In another example, in block 428, the migration management compute device 112 may determine the predefined VNF deployment template based on a decision of a predefined decision tree to identify the appropriate resource configuration required to that meet the operational performance levels of the legacy network appliance 108.

In block 430, the migration management compute device 112 updates the appropriate field(s) of the determined VNF deployment template as a function of the retrieved configuration information and operational parameters. To do so, in block 432, the migration management compute device 112 updates one or more required resource fields of the determined VNF deployment template. Additionally, in block 434, the migration management compute device 112 updates one or more network configuration fields of the determined VNF deployment template.

In block 436, the migration management compute device 112 deploys, configures, and brings into service the VNF instance 116 on the NFV appliance 110 based on the updated VNF deployment template. To do so, the migration management compute device 112 may operationally function as an orchestrator or manager for VNF instantiation; however, it should be appreciated that, in some examples not covered by the claims but useful for understanding the invention, the migration management compute device 112 may provide such information to an orchestration and management system (e.g., a network functions virtualization management and orchestration (NFV-MANO)) which deploys and configures the VNF instance 116. In block 438, the migration management compute device 112 performs a swap operation (see, e.g., the method 500 of FIG. 5) between the legacy network appliance 108 and the brought into-service NVF instance 116 on the NFV appliance 110.

Referring now to FIG. 5, a method 500 for hot-swapping a legacy network appliance (e.g., the legacy network appliance 108 of FIG. 1) with an NFV appliance (e.g., the NFV appliance 110 of FIG. 1), or more particularly with a VNF instance (e.g., one of the VNF instances 116 of FIG. 1) of the NFV appliance 110, is shown which may be executed by a migration management computing device (e.g., the migration management compute device 112 of FIG. 1). The method 500 begins with block 502, in which the migration management compute device 112 determines whether a hot-swap operation is to be performed. It should be appreciated that a VNF instance 116 has already been configured for replacing the legacy network appliance 108 and brought into service, such as may be performed in accordance with the method 400 of FIG. 4.

If the migration management compute device 112 determines the hot-swap operation is to be performed in block 502, the method 500 advances to block 504, in which the migration management compute device 112 disables the one or more network interfaces of the legacy network appliance 108 to remove the legacy network appliance from service. In block 505, the migration management compute device 112 enables one or more network interfaces of the NFV appliance 110 on which the configured VNF instance 116 resides to bring the NFV appliance 110 into service. In block 508, the migration management compute device 112 reports an IP address of the NFV appliance 110 to re-route network traffic to the NFV appliance 110. In block 510, the migration management compute device 112 determines whether network traffic has been received by the NFV appliance 110. If so, the method 500 advances to block 512.

In block 512, the migration management compute device 112 performs a hot-swap health check verification of the NFV appliance 110. To do so, the migration management compute device 112 may interrogate a system log file of the VNF instance 116 to identify whether any critical error messages are present, indicating a health failure. In block 514, the migration management compute device 112 determines whether the hot-swap health check verification has passed. If not, the method 500 branches to block 516, in which the migration management compute device 112 rolls back the swap operation. To do so, the migration management compute device 112 re-enables the interface(s) of the legacy network appliance 108, restores the IP address of the legacy network appliance 108, and re-routes the network traffic back to the legacy network appliance 108.

In some embodiments, the migration management compute device 112 may additionally delete the VNF instance 116. In block 518, the migration management compute device 112 marks a swap status corresponding to the hot-swap operation as unsuccessful in the device list table. As described previously, the device list table includes at least the IP addresses of all legacy network appliances 108 communicatively coupled to the migration management compute device 112. In block 520, the migration management compute device 112 may notify an administrator of the hot-swap failure before the method 500 returns to block 502 to determine whether to perform another hot-swap operation.

If the migration management compute device 112 determines the hot-swap health check verification has passed in block 514, the method branches to block 522 to perform a hot-swap performance verification of the NFV appliance 110. To do so, the migration management compute device 112 may request, from the VNF instance 116, one or more values associated with operational parameters that were used to configure the VNF instance 116 and compare those values against the requirements (e.g., an acceptable value range) to determine whether the operational performance of the VNF instance 116 is acceptable relative to the operational performance requirements placed thereon (i.e., based on the previously collected operational parameters of the legacy network appliance 108 for which the VNF instance 116 was configured).

In block 524, the migration management compute device 112 determines whether a result of the hot-swap performance verification indicates the performance levels fall within the acceptable ranges. If not, the method 500 branches to block 516, in which the migration management compute device 112 rolls back the hot-swap operation, as described previously. Otherwise, if the migration management compute device 112 determines the result of the hot-swap performance verification indicates the performance levels fall within the acceptable ranges in block 524, the method 500 branches to block 526. In block 526, the migration management compute device 112 marks a swap status associated with the hot-swap operation as successful in the device list table. In block 528, the migration management compute device 112 releases the IP address of the legacy network appliance 108 and updates the device list table accordingly. It should be appreciated that under certain conditions, such as the legacy network appliance 108 being returned to service after a maintenance upgrade, instead of the IP address of the legacy network appliance 108 being released, the legacy network appliance 108 may be restored (i.e., interface(s) of the legacy network appliance 108 re-enabled, the network traffic redirected to the legacy network appliance 108, etc.).

In some embodiments, the migration management compute device 112 may start a swap timer on the legacy network appliance 108 when the hot-swap process is initiated. In such embodiments, when the timer is exhausted, the interfaces on the legacy network appliance 108 are disabled, removing the legacy network appliance 108 from service.

## Claims

1. A compute device for managing a hot-swap between a legacy network appliance (108) and a network functions virtualization, NFV, appliance (110), the compute device (112) comprising:
a network traffic ingress/egress manager (308) configured to:
receive inbound network traffic and route outbound network traffic;
manage connections to physical and virtual network ports of the compute device (112) as well as ingress/egress buffers/queues associated therewith; and
maintain a device list table which maintains internet protocol, IP, addresses of those legacy network appliances (108) and VNF instances (116) to which the compute device (112) is communicatively coupled;
swap operation management circuitry (310) configured to:
establish a secure connection with the legacy network appliance (108); and
retrieve configuration information and operational parameters of the legacy network appliance (108) via the established secure connection, wherein the configuration information includes one or more resource configuration settings of the legacy network appliance (108), and wherein the operational parameters include information corresponding to one or more network interfaces of the legacy network appliance (108), and
virtual network function, VNF, orchestration circuitry (318) configured to:
deploy a VNF instance (116) on the NFV appliance (110) based on the configuration information and operational parameters; and
perform a hot-swap operation to re-route network traffic from the legacy network appliance (108) to the NFV appliance (110),
wherein the VNF orchestration circuitry (318) being configured to perform the hot-swap operation comprises the VNF orchestration circuitry (318) being configured to:
retrieve a first IP address of the legacy network appliance (108) to be replaced from the device list table;
disable the one or more network interfaces of the legacy network appliance (108);
enable one or more network interfaces of the VNF instance, wherein each of the one or more enabled network interfaces of the VNF instance (116) corresponds to one of the one or more disabled network interfaces of the legacy network appliance (108);
report a second IP address of the VNF instance (116) to re-route network traffic to the VNF instance (116); and
replace the first IP address of the legacy network appliance (108) with the second IP address of the VNF instance in the device list table.

2. The compute device of claim 1, wherein the VNF orchestration circuitry (318) being configured to deploy the VNF instance (116) comprises the VNF orchestration circuitry (318) being configured to:
determine a predefined VNF deployment template based on the retrieved configuration information;
update one or more fields of the predefined VNF deployment template based on the operational parameters; and
configure the VNF instance (116) based on the predefined VNF deployment template.

3. The compute device of claim 1, wherein the swap operation management circuitry (310) is further configured to:
interrogate, subsequent to the deployment of the VNF instance (116), a system log file of the VNF instance (116) to identify whether one or more critical error messages have been logged; and
rollback, in response to a determination that the system log file includes a critical error message, the hot-swap operation to revert network traffic back through the legacy network appliance (108).

4. The compute device of claim 1, wherein the swap operation management circuitry (310) is further configured to:
collect, subsequent to the deployment of the VNF instance (116), one or more performance levels of the VNF instance (116);
determine whether the collected performance levels fall within a respective acceptable range; and
rollback, in response to a determination that at least one of the collected performance levels does not fall within the respective acceptable range, the hot-swap operation to revert network traffic back through the legacy network appliance (108).

5. The compute device of claim 1, wherein the one or more resource configuration settings of the legacy network appliance (108) include an amount of compute resources to allocate to the VNF instance (116) and an amount of storage resources to allocate to the VNF instance (116).

6. The compute device of claim 1, wherein the device list table further includes data selected from the group consisting of i) a first indication that indicates whether the legacy network appliance (108) is a trusted or untrusted device, and ii) a second indication that indicates whether the hot-swap operation has been successful.

7. A method for managing a hot-swap between a legacy network appliance (108) and a network functions virtualization, NFV, appliance (110) by a compute device (112), the method comprising:
receiving inbound network traffic and routing outbound network traffic by a network traffic ingress/egress manager (308) of the compute device (112),
managing, by the network traffic ingress/egress manager (308) of the compute device (112), connections to physical and virtual network ports of the compute device (112) as well as ingress/egress buffers/queues associated therewith;
maintaining, by the network traffic ingress/egress manager (308) of the compute device (112), a device list table which maintains internet protocol, IP, addresses of those legacy network appliances (108) and VNF instances (116) to which the compute device (112) is communicatively coupled;
establishing, by the compute device (112), a secure connection with the legacy network appliance (108);
retrieving, by the compute device (112), configuration information and operational parameters of the legacy network appliance (108) via the established secure connection, wherein the configuration information includes one or more resource configuration settings of the legacy network appliance (108), and wherein the operational parameters include information corresponding to one or more network interfaces of the legacy network appliance (108);
deploying, by the compute device (112), a VNF instance (116) on the NFV appliance (110) based on the configuration information and operational parameters; and
performing, by the compute device (112), a hot-swap operation to re-route network traffic from the legacy network appliance (108) to the NFV appliance (110),
wherein performing the hot-swap operation comprises:
retrieving a first IP address of the legacy network appliance (108) to be replaced from the device list table;
disabling the one or more network interfaces of the legacy network appliance (108);
enabling one or more network interfaces of the VNF instance (116), wherein each of the one or more enabled network interfaces of the VNF instance (116) corresponds to one of the one or more disabled network interfaces of the legacy network appliance (108);
reporting a second IP address of the VNF instance (116) to re-route network traffic to the VNF instance (116);
replacing the first IP address of the legacy network appliance (108) with the second IP address of the VNF instance (116) in the device list table.

8. The method of claim 7, wherein deploying the VNF instance (116) comprises:
determining a predefined VNF deployment template based on the retrieved configuration information;
updating one or more fields of the predefined VNF deployment template based on the operational parameters; and
configuring the VNF instance (116) based on the predefined VNF deployment template.

9. The method of claim 7, further comprising:
interrogating, by the compute device (112) and subsequent to the deployment of the VNF instance (116), a system log file of the VNF instance (116)to identify whether one or more critical error messages have been logged; and
rolling back, by the compute device (112) and in response to a determination that the system log file includes a critical error message, the hot-swap operation to revert network traffic back through the legacy network appliance (108).

10. The method of claim 7, further comprising:
collecting, by the compute device (112) and subsequent to the deployment of the VNF instance (116), one or more performance levels of the VNF instance (116);
determining, by the compute device (112), whether the collected performance levels fall within a respective acceptable range; and
rolling back, by the compute device (112) and in response to a determination that at least one of the collected performance levels does not fall within the respective acceptable range, the hot-swap operation to revert network traffic back through the legacy network appliance (108).

11. The method of claim 7, wherein the device list table further includes data selected from the group consisting of i) a first indication that indicates whether the legacy network appliance (108) is a trusted or untrusted device, and ii) a second indication that indicates whether the hot-swap operation has been successful.

12. One or more machine-readable storage media comprising a plurality of instructions stored thereon that, when executed, causes a compute device (112) to perform the method of any of claims 7-11.

## Patentansprüche

1. Rechenvorrichtung zum Verwalten eines Hot-Swap zwischen einer Legacy-Netzwerkeinrichtung (108) und einer Netzwerkfunktionsvirtualisierungs- bzw. NFV-Einrichtung (110), wobei die Rechenvorrichtung (112) Folgendes umfasst:
einen Netzwerkverkehrseingang/-ausgang-Manager (308), der zu Folgendem ausgelegt ist:
Empfangen von eingehendem Netzwerkverkehr und Leiten von ausgehendem Netzwerkverkehr;
Verwalten von Verbindungen mit physischen und virtuellen Netzwerkports der Rechenvorrichtung (112) sowie von damit assoziierten Eingangs-/Ausgangspuffern/-warteschlangen; und
Pflegen einer Vorrichtungslistentabelle, die Internetprotokoll- bzw. IP-Adressen jener Legacy-Netzwerkeinrichtungen (108) und VNF-Instanzen (116) führt, mit denen die Rechenvorrichtung (112) kommunikativ gekoppelt ist;
eine Swap-Operation-Verwaltungsschaltungsanordnung (310), die zu Folgendem ausgelegt ist:
Herstellen einer sicheren Verbindung mit der Legacy-Netzwerkeinrichtung (108); und
Abrufen von Konfigurationsinformationen und Betriebsparametern der Legacy-Netzwerkeinrichtung (108) über die hergestellte sichere Verbindung, wobei die Konfigurationsinformationen eine oder mehrere Ressourcenkonfigurationseinstellungen der Legacy-Netzwerkeinrichtung (108) beinhalten und wobei die Betriebsparameter Informationen beinhalten, die einer oder mehreren Netzwerkschnittstellen der Legacy-Netzwerkeinrichtung (108) entsprechen, und
eine Virtuelle-Netzwerkfunktion- bzw. VNF-Orchestrierungsschaltungsanordnung (318), die zu Folgendem ausgelegt ist:
Einsetzen einer VNF-Instanz (116) in der NFV-Einrichtung (110) basierend auf den Konfigurationsinformationen und Betriebsparametern; und
Durchführen einer Hot-Swap-Operation, um Netzwerkverkehr von der Legacy-Netzwerkeinrichtung (108) zu der NFV-Einrichtung (110) umzuleiten,
wobei die VNF-Orchestrierungsschaltungsanordnung (318), ausgelegt zum Durchführen der Hot-Swap-Operation, umfasst, dass die VNF-Orchestrierungsschaltungsanordnung (318) zu Folgendem ausgelegt ist:
Abrufen einer ersten IP-Adresse der zu ersetzenden Legacy-Netzwerkeinrichtung (108) aus der Vorrichtungslistentabelle;
Deaktivieren der einen oder der mehreren Netzwerkschnittstellen der Legacy-Netzwerkeinrichtung (108) ;
Aktivieren einer oder mehrerer Netzwerkschnittstellen der VNF-Instanz, wobei jede der einen oder der mehreren aktivierten Netzwerkschnittstellen der VNF-Instanz (116) einer der einen oder der mehreren deaktivierten Netzwerkschnittstellen der Legacy-Netzwerkeinrichtung (108) entspricht;
Melden einer zweiten IP-Adresse der VNF-Instanz (116), um Netzwerkverkehr zu der VNF-Instanz (116) umzuleiten; und
Ersetzen der ersten IP-Adresse der Legacy-Netzwerkeinrichtung (108) mit der zweiten IP-Adresse der VNF-Instanz in der Vorrichtungslistentabelle.

2. Rechenvorrichtung nach Anspruch 1, wobei die VNF-Orchestrierungsschaltungsanordnung (318), ausgelegt zum Einsetzen der VNF-Instanz (116), umfasst, dass die VNF-Orchestrierungsschaltungsanordnung (318) zu Folgendem ausgelegt ist:
Bestimmen einer vordefinierten VNF-Einsatzvorlage basierend auf den abgerufenen Konfigurationsinformationen;
Aktualisieren eines oder mehrerer Felder der vordefinierten VNF-Einsatzvorlage basierend auf den Betriebsparametern; und
Konfigurieren der VNF-Instanz (116) basierend auf der vordefinierten VNF-Einsatzvorlage.

3. Rechenvorrichtung nach Anspruch 1, wobei die Swap-Operation-Verwaltungsschaltungsanordnung (310) ferner zu Folgendem ausgelegt ist:
Abfragen, im Anschluss an den Einsatz der VNF-Instanz (116), einer Systemprotokolldatei der VNF-Instanz (116), um zu identifizieren, ob eine oder mehrere kritische Fehlernachrichten protokolliert wurden; und
Rückgängigmachen, als Reaktion auf eine Bestimmung, dass die Systemprotokolldatei eine kritische Fehlernachricht enthält, der Hot-Swap-Operation, um Netzwerkverkehr zurück durch die Legacy-Netzwerkeinrichtung (108) zu führen.

4. Rechenvorrichtung nach Anspruch 1, wobei die Swap-Operation-Verwaltungsschaltungsanordnung (310) ferner zu Folgendem ausgelegt ist:
Erfassen, im Anschluss an den Einsatz der VNF-Instanz (116), eines oder mehrerer Leistungsfähigkeitsniveaus der VNF-Instanz (116);
Bestimmen, ob die erfassten Leistungsfähigkeitsniveaus in einem jeweiligen akzeptablen Bereich liegen; und
Rückgängigmachen, als Reaktion auf eine Bestimmung, dass mindestens eines der erfassten Leistungsfähigkeitsniveaus nicht in dem jeweiligen akzeptablen Bereich liegt, der Hot-Swap-Operation, um Netzwerkverkehr zurück durch die Legacy-Netzwerkeinrichtung (108) zu führen.

5. Rechenvorrichtung nach Anspruch 1, wobei die eine oder die mehreren Ressourcenkonfigurationseinstellungen der Legacy-Netzwerkeinrichtung (108) eine Menge an die VNF-Instanz (116) zuzuweisender Rechenressourcen und eine Menge an die VNF-Instanz (116) zuzuweisender Speicherungsressourcen beinhalten.

6. Rechenvorrichtung nach Anspruch 1, wobei die Vorrichtungslistentabelle ferner Daten beinhaltet, ausgewählt aus der Gruppe bestehend aus i) einer ersten Angabe, die angibt, ob die Legacy-Netzwerkeinrichtung (108) eine vertrauenswürdige oder nichtvertrauenswürdige Vorrichtung ist, und ii) einer zweiten Angabe, die angibt, ob die Hot-Swap-Operation erfolgreich war.

7. Verfahren zum Verwalten eines Hot-Swap zwischen einer Legacy-Netzwerkeinrichtung (108) und einer Netzwerkfunktionsvirtualisierungs- bzw. NFV-Einrichtung (110) durch eine Rechenvorrichtung (112), wobei das Verfahren Folgendes umfasst:
Empfangen von eingehendem Netzwerkverkehr und Leiten von ausgehendem Netzwerkverkehr durch einen Netzwerkverkehrseingang/-ausgang-Manager (308) der Rechenvorrichtung (112);
Verwalten, durch den Netzwerkverkehrseingang/-ausgang-Manager (308) der Rechenvorrichtung (112), von Verbindungen mit physischen und virtuellen Netzwerkports der Rechenvorrichtung (112) sowie von damit assoziierten Eingangs-/Ausgangspuffern/-warteschlangen; und
Pflegen, durch den Netzwerkverkehrseingang/-ausgang-Manager (308) der Rechenvorrichtung (112), einer Vorrichtungslistentabelle, die Internetprotokoll- bzw. IP-Adressen jener Legacy-Netzwerkeinrichtungen (108) und VNF-Instanzen (116) führt, mit denen die Rechenvorrichtung (112) kommunikativ gekoppelt ist;
Herstellen, durch die Rechenvorrichtung (112), einer sicheren Verbindung mit der Legacy-Netzwerkeinrichtung (108) ;
Abrufen, durch die Rechenvorrichtung (112), von Konfigurationsinformationen und Betriebsparametern der Legacy-Netzwerkeinrichtung (108) über die hergestellte sichere Verbindung, wobei die Konfigurationsinformationen eine oder mehrere Ressourcenkonfigurationseinstellungen der Legacy-Netzwerkeinrichtung (108) beinhalten und wobei die Betriebsparameter Informationen beinhalten, die einer oder mehreren Netzwerkschnittstellen der Legacy-Netzwerkeinrichtung (108) entsprechen;
Einsetzen, durch die Rechenvorrichtung (112), einer VNF-Instanz (116) in der NFV-Einrichtung (110) basierend auf den Konfigurationsinformationen und Betriebsparametern; und
Durchführen, durch die Rechenvorrichtung (112), einer Hot-Swap-Operation, um Netzwerkverkehr von der Legacy-Netzwerkeinrichtung (108) zu der NFV-Einrichtung (110) umzuleiten,
wobei das Durchführen der Hot-Swap-Operation Folgendes umfasst:
Abrufen einer ersten IP-Adresse der zu ersetzenden Legacy-Netzwerkeinrichtung (108) aus der Vorrichtungslistentabelle;
Deaktivieren der einen oder der mehreren Netzwerkschnittstellen der Legacy-Netzwerkeinrichtung (108) ;
Aktivieren einer oder mehrerer Netzwerkschnittstellen der VNF-Instanz (116), wobei jede der einen oder der mehreren aktivierten Netzwerkschnittstellen der VNF-Instanz (116) einer der einen oder der mehreren deaktivierten Netzwerkschnittstellen der Legacy-Netzwerkeinrichtung (108) entspricht;
Melden einer zweiten IP-Adresse der VNF-Instanz (116), um Netzwerkverkehr zu der VNF-Instanz (116) umzuleiten;
Ersetzen der ersten IP-Adresse der Legacy-Netzwerkeinrichtung (108) mit der zweiten IP-Adresse der VNF-Instanz (116) in der Vorrichtungslistentabelle.

8. Verfahren nach Anspruch 7, wobei das Einsetzen der VNF-Instanz (116) Folgendes umfasst:
Bestimmen einer vordefinierten VNF-Einsatzvorlage basierend auf den abgerufenen Konfigurationsinformationen;
Aktualisieren eines oder mehrerer Felder der vordefinierten VNF-Einsatzvorlage basierend auf den Betriebsparametern; und
Konfigurieren der VNF-Instanz (116) basierend auf der vordefinierten VNF-Einsatzvorlage.

9. Verfahren nach Anspruch 7, das ferner Folgendes umfasst:
Abfragen, durch die Rechenvorrichtung (112) und im Anschluss an den Einsatz der VNF-Instanz (116), einer Systemprotokolldatei der VNF-Instanz (116), um zu identifizieren, ob eine oder mehrere kritische Fehlernachrichten protokolliert wurden; und
Rückgängigmachen, durch die Rechenvorrichtung (112) und als Reaktion auf eine Bestimmung, dass die Systemprotokolldatei eine kritische Fehlernachricht enthält, der Hot-Swap-Operation, um Netzwerkverkehr zurück durch die Legacy-Netzwerkeinrichtung (108) zu führen.

10. Verfahren nach Anspruch 7, das ferner Folgendes umfasst:
Erfassen, durch die Rechenvorrichtung (112) und im Anschluss an den Einsatz der VNF-Instanz (116), eines oder mehrerer Leistungsfähigkeitsniveaus der VNF-Instanz (116);
Bestimmen, durch die Rechenvorrichtung (112), ob die erfassten Leistungsfähigkeitsniveaus in einem jeweiligen akzeptablen Bereich liegen; und
Rückgängigmachen, durch die Rechenvorrichtung (112) und als Reaktion auf eine Bestimmung, dass mindestens eines der erfassten Leistungsfähigkeitsniveaus nicht in dem jeweiligen akzeptablen Bereich liegt, der Hot-Swap-Operation, um Netzwerkverkehr zurück durch die Legacy-Netzwerkeinrichtung (108) zu führen.

11. Verfahren nach Anspruch 7, wobei die Vorrichtungslistentabelle ferner Daten beinhaltet, ausgewählt aus der Gruppe bestehend aus i) einer ersten Angabe, die angibt, ob die Legacy-Netzwerkeinrichtung (108) eine vertrauenswürdige oder nichtvertrauenswürdige Vorrichtung ist, und ii) einer zweiten Angabe, die angibt, ob die Hot-Swap-Operation erfolgreich war.

12. Maschinenlesbares Speicherungsmedium bzw. maschinenlesbare Speicherungsmedien, umfassend mehrere darauf gespeicherte Anweisungen, die bei Ausführung bewirken, dass eine Rechenvorrichtung (112) das Verfahren nach einem der Ansprüche 7-11 durchführt.

## Revendications

1. Dispositif informatique permettant de gérer un remplacement à chaud entre un appareil de réseau existant (108) et un appareil de virtualisation de fonctions de réseau, NFV, (110), le dispositif informatique (112) comprenant :
un gestionnaire d'entrée/sortie de trafic de réseau (308) configuré pour :
recevoir le trafic de réseau entrant et effectuer un routage du trafic de réseau sortant ;
gérer des connexions à des ports de réseau physiques et virtuels du dispositif informatique (112) ainsi que des tampons/files d'attente d'entrée/sortie qui leur sont associés ; et
maintenir une table de listes de dispositifs qui maintient des adresses de protocole Internet, IP, de ces appareils de réseau existants (108) et instances de VNF (116) auxquelles le dispositif informatique (112) est couplé par voie de communication ;
des circuits de gestion d'opérations de remplacement (310) configurés pour :
établir une connexion sécurisée avec l'appareil de réseau existant (108) ; et
récupérer des informations de configuration et des paramètres de fonctionnement de l'appareil de réseau existant (108) par l'intermédiaire de la connexion sécurisée établie, dans lequel les informations de configuration comprennent un ou plusieurs réglages de configuration de ressources de l'appareil de réseau existant (108), et dans lequel les paramètres de fonctionnement comprennent des informations correspondant à une ou plusieurs interfaces de réseau de l'appareil de réseau existant (108), et
des circuits d'orchestration de fonction de réseau virtuel, VNF, (318) configurés pour :
déployer une instance de VNF (116) sur l'appareil NFV (110) sur la base des informations de configuration et des paramètres de fonctionnement ; et
réaliser une opération de remplacement à chaud pour effectuer un reroutage d'un trafic de réseau de l'appareil de réseau existant (108) vers l'appareil NFV (110) ,
dans lequel les circuits d'orchestration de VNF (318) sont configurés pour réaliser l'opération de remplacement à chaud et comprennent le fait que les circuits d'orchestration de VNF (318) sont configurés pour :
récupérer une première adresse IP de l'appareil de réseau existant (108) à remplacer à partir de la table de listes de dispositifs ;
désactiver lesdites une ou plusieurs interfaces de réseau de l'appareil de réseau existant (108) ;
activer une ou plusieurs interfaces de réseau de l'instance de VNF, dans lequel chacune desdites une ou
plusieurs interfaces de réseau activées de l'instance de VNF (116) correspond à l'une desdites une ou
plusieurs interfaces de réseau désactivées de l'appareil de réseau existant (108) ;
signaler une seconde adresse IP de l'instance de VNF (116) pour effectuer un reroutage d'un trafic de réseau vers l'instance de VNF (116) ; et
remplacer la première adresse IP de l'appareil de réseau existant (108) par la seconde adresse IP de l'instance de VNF dans la table de listes de dispositifs.

2. Dispositif informatique selon la revendication 1, dans lequel le fait que les circuits d'orchestration de VNF (318) sont configurés pour déployer l'instance de VNF (116) comprend le fait que les circuits d'orchestration de VNF (318) sont configurés pour :
déterminer un modèle de déploiement de VNF prédéfini sur la base des informations de configuration récupérées ;
mettre à jour un ou plusieurs champs du modèle de déploiement de VNF prédéfini sur la base des paramètres de fonctionnement ; et
configurer l'instance de VNF (116) sur la base du modèle de déploiement de VNF prédéfini.

3. Dispositif informatique selon la revendication 1, dans lequel les circuits de gestion des opérations de remplacement (310) sont en outre configurés pour :
interroger, après le déploiement de l'instance de VNF (116), un fichier de journalisation système de l'instance de VNF (116) pour identifier si un ou plusieurs messages d'erreur critique ont été journalisés ; et
annuler, en réponse à une détermination du fait que le fichier de journalisation système comprend un message d'erreur critique, l'opération de remplacement à chaud pour rétablir le trafic de réseau à travers l'appareil de réseau existant (108).

4. Dispositif informatique selon la revendication 1, dans lequel les circuits de gestion d'opérations de remplacement (310) sont en outre configurés pour :
collecter, après le déploiement de l'instance de VNF (116), un ou plusieurs niveaux de performances de l'instance de VNF (116) ;
déterminer si les niveaux de performances collectés se situent dans une plage acceptable respective ; et
annuler, en réponse à une détermination du fait qu'au moins l'un des niveaux de performances collectés ne se situe pas dans la plage acceptable respective, l'opération de remplacement à chaud pour rétablir le trafic de réseau à travers l'appareil de réseau existant (108).

5. Dispositif informatique selon la revendication 1, dans lequel lesdits un ou plusieurs réglages de configuration de ressources de l'appareil de réseau existant (108) comprennent une quantité de ressources informatiques à allouer à l'instance de VNF (116) et une quantité de ressources de stockage à allouer à l'instance de VNF (116).

6. Dispositif informatique selon la revendication 1, dans lequel la table de listes de dispositifs comprend en outre des données sélectionnées dans le groupe constitué par i) une première indication qui indique si l'appareil de réseau existant (108) est un dispositif de confiance ou non de confiance, et ii) une seconde indication qui indique si l'opération de remplacement à chaud a réussi.

7. Procédé permettant de gérer un remplacement à chaud entre un appareil de réseau existant (108) et un appareil de virtualisation de fonctions de réseau, NFV, (110) par un dispositif informatique (112), le procédé comprenant :
la réception d'un trafic de réseau entrant et le routage du trafic de réseau sortant par un gestionnaire d'entrée/sortie de trafic de réseau (308) du dispositif informatique (112),
la gestion, par le gestionnaire d'entrée/sortie de trafic de réseau (308) du dispositif informatique (112), de connexions à des ports de réseau physiques et virtuels du dispositif informatique (112) ainsi que de tampons/files d'attente d'entrée/sortie qui leur sont associés ;
le maintien, par le gestionnaire d'entrée/sortie de trafic de réseau (308) du dispositif informatique (112), d'une table de listes de dispositifs qui maintient des adresses de protocole Internet, IP, de ces appareils de réseau existants (108) et instances de VNF (116) auxquelles le dispositif informatique (112) est couplé par voie de communication ;
l'établissement, par le dispositif informatique (112), d'une connexion sécurisée avec l'appareil de réseau existant (108) ;
la récupération, par le dispositif informatique (112), d'informations de configuration et de paramètres de fonctionnement de l'appareil de réseau existant (108) par l'intermédiaire de la connexion sécurisée établie, dans lequel les informations de configuration comprennent un ou plusieurs réglages de configuration de ressources de l'appareil de réseau existant (108), et dans lequel les paramètres de fonctionnement comprennent des informations correspondant à une ou plusieurs interfaces de réseau de l'appareil de réseau existant (108) ;
le déploiement, par le dispositif informatique (112), d'une instance de VNF (116) sur l'appareil NFV (110) sur la base des informations de configuration et des paramètres de fonctionnement ; et
la réalisation, par le dispositif informatique (112), d'une opération de remplacement à chaud pour effectuer un reroutage du trafic de réseau de l'appareil de réseau existant (108) vers l'appareil NFV (110),
dans lequel la réalisation de l'opération de remplacement à chaud comprend :
la récupération d'une première adresse IP de l'appareil de réseau existant (108) à remplacer à partir de la table de listes de dispositifs ;
la désactivation desdites une ou plusieurs interfaces de réseau de l'appareil de réseau existant (108) ;
l'activation d'une ou plusieurs interfaces de réseau de l'instance de VNF (116), dans lequel chacune desdites une ou plusieurs interfaces de réseau activées de l'instance de VNF (116) correspond à l'une desdites une ou plusieurs interfaces de réseau désactivées de l'appareil de réseau existant (108) ;
le signalement d'une seconde adresse IP de l'instance de VNF (116) pour effectuer un reroutage d'un trafic de réseau vers l'instance de VNF (116) ;
le remplacement de la première adresse IP de l'appareil de réseau existant (108) par la seconde adresse IP de l'instance de VNF (116) dans la table de listes de dispositifs.

8. Procédé selon la revendication 7, dans lequel le déploiement de l'instance de VNF (116) comprend :
la détermination d'un modèle de déploiement de VNF prédéfini sur la base des informations de configuration récupérées ;
la mise à jour d'un ou plusieurs champs du modèle de déploiement de VNF prédéfini sur la base des paramètres de fonctionnement ; et
la configuration de l'instance de VNF (116) sur la base du modèle de déploiement de VNF prédéfini.

9. Procédé selon la revendication 7, comprenant en outre :
l'interrogation, par le dispositif informatique (112) et après le déploiement de l'instance de VNF (116), d'un fichier de journalisation système de l'instance de VNF (116) pour identifier si un ou plusieurs messages d'erreur critique ont été journalisés ; et
l'annulation, par le dispositif informatique (112) et en réponse à une détermination du fait que le fichier de journalisation système comprend un message d'erreur critique, de l'opération de remplacement à chaud pour rétablir le trafic de réseau à travers l'appareil de réseau existant (108).

10. Procédé selon la revendication 7, comprenant en outre :
la collecte, par le dispositif informatique (112) et après le déploiement de l'instance de VNF (116), d'un ou plusieurs niveaux de performances de l'instance de VNF (116) ;
la détermination, par le dispositif informatique (112), du fait de savoir si les niveaux de performances collectés se situent dans une plage acceptable respective ; et
l'annulation, par le dispositif informatique (112) et en réponse à une détermination du fait qu'au moins l'un des niveaux de performances collectés ne se situe pas dans la plage acceptable respective, de l'opération de remplacement à chaud pour rétablir le trafic de réseau à travers l'appareil de réseau existant (108).

11. Procédé selon la revendication 7, dans lequel le tableau de listes de dispositifs comprend en outre des données sélectionnées dans le groupe constitué par i) une première indication qui indique si l'appareil de réseau existant (108) est un dispositif de confiance ou non de confiance, et ii) une seconde indication qui indique si l'opération de remplacement à chaud a réussi.

12. Un ou plusieurs supports de stockage lisibles par machine comprenant une pluralité d'instructions stockées sur ceux-ci qui, lorsqu'elles sont exécutées, amènent un dispositif informatique (112) à mettre en œuvre le procédé selon l'une quelconque des revendications 7-11.
